Europäisches Patentamt

European Patent Office

Office européen des brevets

(19)

(11) Veröffentlichungsnummer: **0 232 860**

**A1**

(12) **EUROPÄISCHE PATENTANMELDUNG**

(21) Anmeldenummer: 87101595.4

(22) Anmeldetag: 05.02.87

(51) Int. Cl.⁴: **F16L 21/00**

(30) Priorität: 06.02.86 DE 3603712

(43) Veröffentlichungstag der Anmeldung:
19.08.87 Patentblatt 87/34

(84) Benannte Vertragsstaaten:
AT BE CH DE ES FR GB GR IT LI LU NL SE

(71) Anmelder: **Stanelle Behälter- und Stahlbau GmbH & Co KG**
**Langwiesenstrasse 4**
**D-7129 Güglingen-Frauenzimmern(DE)**

(72) Erfinder: **Stanelle, Ambros**
**Rosenstrasse 4**
**D-7129 Güglingen-Frauenzimmern(DE)**

(74) Vertreter: **Jeser, Jean-Pierre**
**Lerchenstrasse 56**
**D-7100 Heilbronn(DE)**

(54) **Rohrkupplung.**

(57) Es wird eine Rohrkupplung (12) zum kraft-und formschlüssigen Verbinden zweier Rohre angegeben, die sich dadurch auszeichnet, daß die Innenseite des Rohrmantels (12) im Querschnitt aus drei aneinanderstoßende Kreisbögen gleicher Krümmung k zusammengesetzt ist, von denen der mittlere Kreisbogen den beiden Längsrändern (18) gegenüberliegend angeordnet ist, und der Bogenwinkel w des mittleren Kreisbogens größer als Null Grad und kleiner als 180 Grad ist. Weiterhin sind die beiden äußeren Kreisbögen an den jeweiligen Endbereichen K des mittleren Kreisbogens schwenkbar derart befestigt, daß sie in eine Lage bringbar sind, in der sie zusammen mit dem mittleren Kreisbogen auf dem Umfang eines einzigen Kreises liegen. Schließlich ist noch der Rohrmantel (12) im Bereich der drei Kreisbögen jeweils biegesteif ausgebildet.

FIG.2

## Rohrkupplung

TECHNISCHES GEBIET

Die Erfindung betrifft eine Rohrkupplung zum Verbinden zweier Rohre, mit in Längsrichtung aufgetrenntem Rohrmantel, dessen beide Längsränder gegenseitig verschraubbar ausgebildet sind.

STAND DER TECHNIK

Aus der US-A 3,700,008 und der GB-A 2 132 677 ist jeweils eine Rohrschelle mit einem Schellenkörper aus einem flexiblen bzw. halbsteifen Material konstanter Dicke bekannt. Die Rohrschellen sind dazu bestimmt, einen Dichtungsring fest gegen den vorgegebenen Umfang eines Rohres bzw. zweier in der Schelle gestoßener Rohre zu pressen. Diese Kupplungen werden daher bevorzugt als Manschette zum Abdichten von Leckagen in einem Rohr oder zum Abdichten des Stoßbereiches zweier zu stoßender Rohre und nicht zum kraftschlüssigen Verbinden von Rohren verwendet.

Entsprechendes gilt auch für die aus der EP-A 0 057 373 bekannte Spannmuffe für Rohre. Auch bei dieser Spannmuffe weist der Muffenkörper eine längs seines Umfangs konstante, relativ geringe Biegesteifigkeit auf. Der einteilige Muffenkörper besitzt in einem Fertigungs-Zwischenstadium zwei Halb schalen in jeweils kreisrunder Form, die miteinander in ihren einen Endpunkten biegeweich zusammengefügt sind. In der Gestalt als fertige Spannmuffe weist auch diese ursprünglich biegeweiche Stelle die längs des übrigen Umfanges vorhandene Biegesteifigkeit auf. Dies wird dadurch erreicht, daß in der Biegestelle dem Blech die in den übrigen Bereichen vorhandene Abbiegung nachträglich eingeformt wird. Der aus einem Abbiegungen aufweisenden Blechstreifen in eine kreisrunde Form gebogene Muffenkörper hat damit die zum Anpressen eines Dichtungsringes an einen Rohrumfang erforderliche längs des Umfangs in allen Punkten gleich große Biegespannkraft.

Auch die aus der US-A 4,473,246 bekannte Rohrkupplung besitzt einen Kupplungskörper von längs des Umfanges konstanter Dicke und konstanter Biegesteifigkeit. Da ein derartiger Kupplungskörper mit wachsender Biegesteifigkeit seine Elastizität verliert, die zum Einfügen von Rohren in die Kupplung erforderlich ist, wird auch diese Rohrkupplung bevorzugt zum Abdichten von vorhandenen Leckagen oder zum Abdichten des Stoßbereiches zweier zu stoßender Rohre verwendet.

Es sind weiterhin zwei-und auch drei-(DE-G 75 19 851) teilige Rohrschellen bekannt. Die mehreren Schellenteile werden gegenseitig durch Schraubverbindungen miteinander verspannt Durch die vorhandenen mehreren losen Teile ist eine solche Kostruktion umständlich zu handhaben. Außerdem besteht bei ungleichmäßigem Anziehen der einzelnen Schrauben die Gefahr, daß sich die Rohrenden infolge ungleich hoher auf sie einwirkender Druckkräfe verformen. Dadurch kann ein ansich kreisrundes Rohr einen mehr oder weniger starken ovalen Querschnitt erhalten, was die Knickfestigkeit des Rohres an dieser Stelle beeinträchtigen würde.

DARSTELLUNG DER ERFINDUNG

Der Erfindung liegt die Aufgabe zugrunde, eine Rohrkupplung der eingangs genannten Art anzugeben, die auf einfache Weise eine kraft-und formschlüssige Verbindung zweier Rohre ermöglicht.

Diese Erfindung ist durch die Merkmale des Hauptanspruchs gegeben. Die Erfindung zeichnet sich dementsprechend dadurch aus, daß die Innenseite des Rohrmantels im Querschnitt aus drei aneinanderstoßende Kreisbögen gleicher Krümmung zusammengesetzt ist, von denen der mittlere Kreisbogen den beiden Längsrändern gegenüberliegend angeordnet ist. Weiterhin ist der Bogenwinkel des mittleren Kreisbogens größer als Null Grad und kleiner als 180 Grad, und ferner sind die beiden äußeren Kreisbögen an den jeweiligen Endbereichen des mittleren Kreisbogens schwenkbar derart befestigt, daß sie in eine Lage bringbar sind, in der sie zusammen mit dem mittleren Kreisbogen auf dem Umfang eines einzigen Kreises liegen. Schließlich ist der Rohrmantel im Bereich dieser drei Kreisbögen jeweils biegesteif aufgebildet.

Die erfindungsgemäße Lösung zeichnet sich durch mehrere Vorteile aus. Die drei Mantelbereiche sind auch im gelösten Zustand der Rohrkupplung unlösbar miteinander verbunden, so daß einzelne Mantelteile nicht verloren gehen können und dadurch immer der komplette Kupplungsmantel vorhanden ist. Durch die drei Mantelbereiche wird bereits bei einer geringen gegenseitigen Spreizung der beiden äußeren Mantelbereiche die lichte Querschnittsfläche der Rohrkupplung stark vergrößert, was das Einführen der zu stoßenden Rohrenden in die Kupplung hinein sehr erleichtert. Die in sich steifen drei Mantelbereiche bewirken, daß im verspannten Zustand der Kupplung vormals unabsichtig verformte Rohrenden wieder in ihre Soll-Form zurückverformt werden. Dies ermöglicht nicht nur, die tatsächliche Knickfestigkeit wieder an die dem Rohr rechnerisch zugrundegelegte Knickfestigkeit anzugleichen, sondern hilft auch, Dichtigkeitsprobleme leichter lösen zu können: Rohrenden mit im Stoßbereich gleichen Querschnitten lassen sich leichter ab dichten als solche mit ungleichen, z. B. ungleichen ovalen Querschnitten.

In vorteilhafter Weise ist der Teil des Rohrmantels, dessen Innenseite durch den äußeren Kreisbogen definiert ist, mittels einer gelenkigen Ausbildung an dem Teil des Rohrmantels angeschlossen, dessen Innenseite durch den mitteleren Kreisbogen definiert ist. Dadurch läßt sich auf technisch einwandfreie Weise die gewünschte Schwenkbewegung verwirklichen.

Eine insbesondere unter wirtschaftlichen Gesichtspunkten besonders vorteilhafte Weiterbildung der erfindungsgemäßen Rohrkupplung zeichnet sich dadurch aus, daß die drei Teile des Rohrmantels einstückig miteinander verbunden sind, und daß die Wandstärke des Rohrmantels im Stoßbereich von jeweils zwei aneinanderstoßenden Kreisbögen einen geringsten Wert besitzt, so daß die Schwenkbewegung durch elastische und/oder plastische Verformung des Rohrmantels im Stoßbereich erfolgt.

Als güngstig hat es sich bei diesem einstückigen Rohrmantel erwiesen, wenn der Rohrmantel eine konstante Wandstärke besitzt und dafür auf seiner Außenseite mehrere, voneinander beabstandete Verstärkungsrippen senkrecht zur Längsachse der Rohrkupplung derart angebracht sind, daß der Rohrmantel in den beiden Stoßbereichen die geringste Biegesteifigkeit besitzt.

Nach einem weiteren Merkmal der Erfindung befindet sich auf der Rückseite eines der beiden Längsränder seitlich neben dem für die gegenseitige Verschraubung der beiden Längsränder vorgesehenen Bohrungsloch jeweils ein Anschlag, gegen den der Kopf einer für die Verschraubung vorgesehenen Schraube so dicht anlegbar ist, daß beim Aufschrauben einer Mutter auf diese Schraube sich letztere nicht um ihre Längsachse drehen kann. Dies erleichtert einmal die Handhabung einer solchen Rohrkupplung, weil es beispielsweise für einen Monteuer nunmehr möglich ist, mit nur einer Hand die Mutter auf einer Schraube anzuziehen und die zweite Hand zum Halten der Rohrkupplung in der gewünschten Stellung zu benutzen. Weiterhin ist dadurch der Einsatz von zugbeanspruchbaren HV-Schrauben möglich, da deren Köpfe eine sechseckige Querschnittsform, und damit eine Anlagefläche für den Anschlag aufweisen. Die Außermittigkeit der Verschraubung bezüglich der Rohrkupplungs-Längsachse läßt sich dadurch gegenüber üblicherweise verwendeten Schloßschrauben, die für vergleichbare Beanspruchungen ausgelegt sind, stark verkleinern; dies wirkt sich günstig auf die Beanspruchung der Wandung der Rohrkupplung aus.

Um den zwischen den Längsrändern der Rohrkupplung vorhandenen Spalt in jeder Stellung der äußeren Kreisbögen abgedeckt zu erhalten, weist die jeweilige Innenseite des Rohrmantels im Bereich der beiden Längsränder eine gleichmäßige Vertiefung auf. In diese Vertiefung ist eine Schürze, deren Dicke dem Maß der Vertiefung entspricht, derart einlegbar, daß sie den Spalt zwischen den Längsrändern überdeckt.

Um zu verhindern, daß die Schürze längs der Rohrkupplung aus derselben herausrutschen kann, ist zumindest ein Rand der Schürze in Längsrichtung nach außen umgebogen, so daß sich die Schürze mit diesem Rand auf einer Stirnseite des Rohrmantels anlagern kann.

Zur Verbesserung der bereits angesprochenen Abdichteigenschaft der Rohrkupplung hat es sich als besonders sinnvoll erwiesen, einen elastisch verformbaren Schlauch so in den Rohrmantel einzulegen, daß die Krümmung seiner Außenseite der Krümmung der Innenseite des Rohrmantels entspricht. Durch mehr oder weniger starkes Zusammendrücken des Schlauches in dessen Umfangsrichtung wird erreicht, daß auch bei in Längsrichtung aufgetrenntem Schlauch dieser infolge seiner Zusammendrückung auch im Bereich seiner Auftrennung vollständig dicht ist.

Nach einem weiteren Merkmal der Erfindung ist ein metalliches, flaches Band zwischen dem Schlauch und dem Rohrmantel vorhanden, wobei beide Enden des Bandes in den Innenraum des Schlauches hineinragen. Damit wird eine unerwünschte elektrostatische Aufladung der Rohrkupplung infolge der elektrisch isolierenden Wirkung des Schlauches verhindert.

Die konstruktiv einfache Form der erfindungsgemäßen Rohrkupplung erlaubt es, sie als Gußteil herzustellen. Dieses Gußteil besteht nach einem weiteren Merkmal der Erfindung aus einer Zinklegierung oder aus einer Aluminium-Zinn-Feingußlegierung.

Weitere Ausgestaltungen und Vorteile der Erfindung sind den in den Ansprüchen weiterhin aufgeführten Merkmalen zu entnehmen.

KURZE BESCHREIBUNG DER ZEICHNUNGEN

Die Erfindung wird im folgenden anhand des in der Zeichnung dargestellten Ausführungsbeispiels näher beschrieben und erläutert. Die der Beschreibung und der Zeichnung zu entnehmenden Merkmale können bei anderen Ausführungsformen der Erfindung einzeln für sich oder zu mehreren in beliebiger Kombination angewendet werden. Es zeigen:

Fig. 1 Eine explosionsartig auseinandergezogene Darstellung einer zur form-und kraftschlüssigen Verbindung zweier Rohre verwendeten Rohrkupplung und

Fig. 2 eine Draufsicht auf einen bei der Rohrkupplung verwendeten Rohrmantel.

## WEGE ZUR AUSFÜHRUNG DER ERFINDUNG

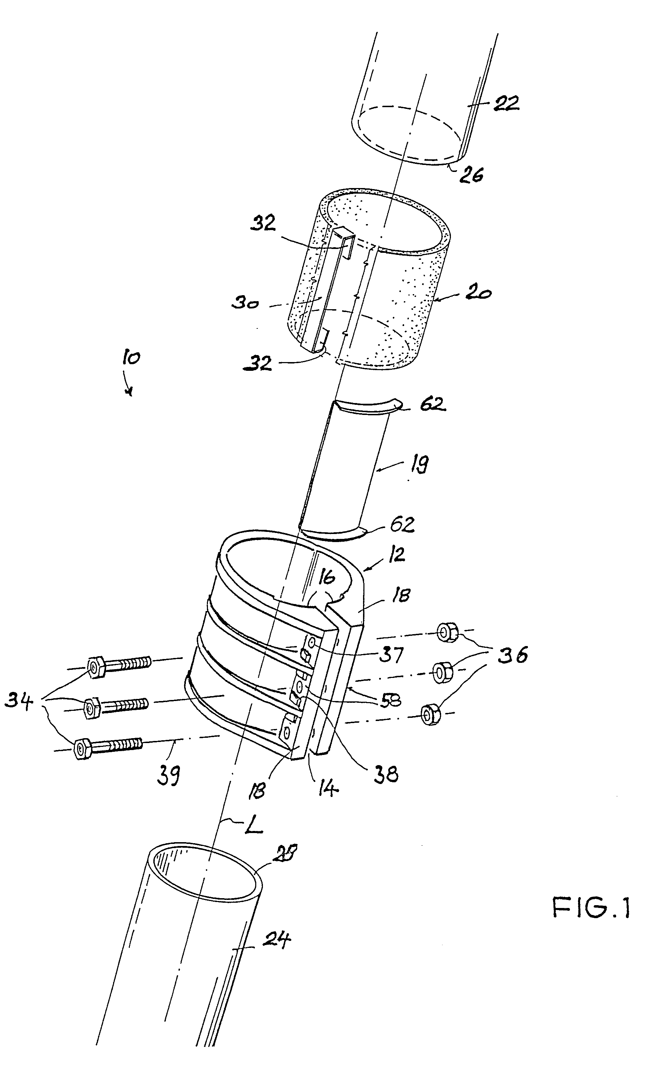

Die in Fig. 1 dargestellte Rohrkupplung 10 besitzt einen in Längsrichtung L sich erstreckenden, im Querschnitt zylinderförmigen Rohrmantel 12, dessen Querschnitt bis auf einen Spalt 14 umfangsmäßig geschlossen ist.

Im Bereich des Spaltes 14 besitzt der Rohrmantel 12 auf seiner Innenseite Vertiefungen 16. In diese Vertiefungen 16 paßt eine Schürze 19 hinein, die so breit ist, daß sie den Spalt vollständig bedeckt.

Im Bereich des Spaltes 14 endet der Rohrmantel 12 jeweils in einer Randverstärkung 18. Durch beide Randverstärkungen 18 greifen drei Schrauben 34 hindurch. Mittels auf die Schrauben 34 aufgeschraubter Muttern 36 lassen sich die beiden Randverstärkungen 18 aufeinander zubewegen. Dadurch wird der zwischen den Randverstärkungen 18 vorhandene Spalt 14 beliebig klein. Auf der dem Spalt abgewandten Rückseite 58 einer der beiden Randverstärkungen 18 ist neben jedem Bohrungsloch 37 ein Anschlag 38 vorhanden. Gegen diesen Anschlag 38 legt sich der Kopf einer in das Bohrungsloch 37 eingeführten Schraube 34 so dicht an, daß sich die Schraube beim Aufdrehen einer Mutter 36 nicht um ihre Längsachse 39 mitdrehen kann. Weitere konstruktive Einzelheiten des Rohrmantels 12 werden weiter unten erläutert.

An der Innenseite des Rohrmantels liegt ein Gummischlauch 20 an. Dieser Gummischlauch 20 sitzt seinerseits auf den Rohrenden zweier Rohre 22, 24, die mit ihren Stirnseiten 26, 28 im Bereich des Gummischlauches 20 und damit im Bereich des Rohrmantels 12 stumpf aufeinanderliegen. Auf der Außenseite des Gummischlauches 20 liegt ein dünnes Metallband 30 an, dessen gegenüberliegende Endbereiche 32 um die jeweiligen Stirnseiten des Gummischlauches 20 umgebogen sind, so daß diese Endbereiche 32 in den Innenraum des Gummischlauches 20 hineinragen.

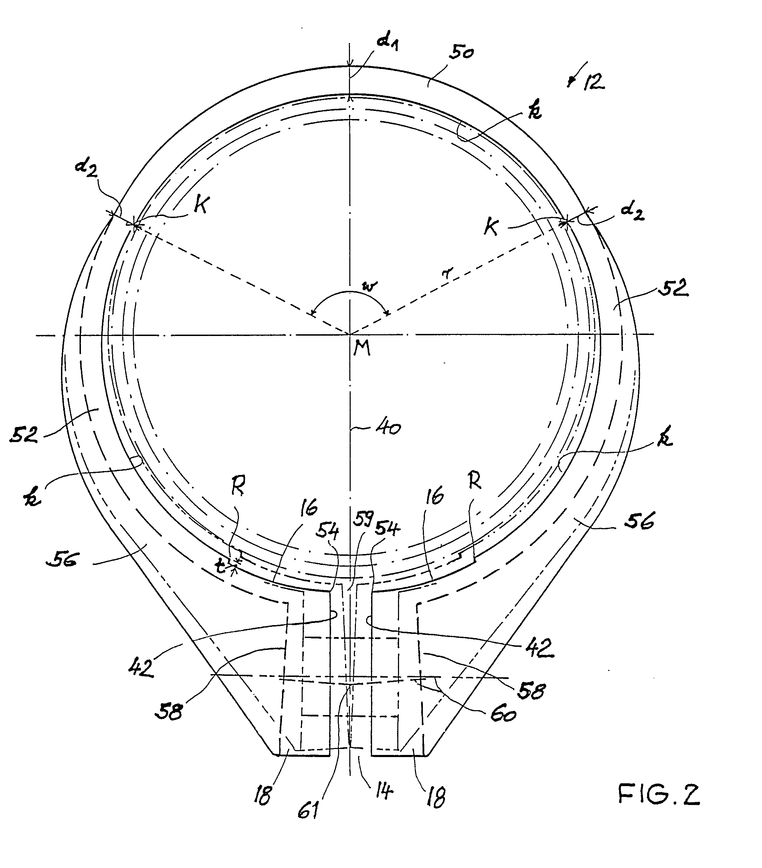

Der Rohrmantel 12 ist bezüglich der in Fig. 2 dargestellten Symmetrieachse 40 klappsymmetrisch aufgebaut. Im nicht verschraubten Zustand besitzt der Rohrmantel 12 die durchgezogen gezeichnete Stellung. Im verschraubten Zustand ist der zwischen den Randverstärkungen 18 befindliche Spalt 14 auf der Außenseite des Rohrmantels 12 völlig verschwunden, so daß die dem Spalt 14 zugewandten Spaltseiten 42 der Randverstärkungen 18 mit ihren jeweiligen äußeren Eckpunkten 44 aneinanderliegen; diese Stellung des Rohrmantels 12 ist gestrichelt gezeichnet.

Im dem Spalt 14 gegenüberliegenden, mittleren Bereich 50, der durch den Mittelpunktswinkel w gekennzeichnet ist, besitzt der Rohrmantel 12 auf seiner Innenseite eine Krümmung k. Diese Krümmung k ist gleichmäßig und entspricht dem Umfang eines Kreises mit dem Radius r und dem Mittelpunkt M. In dem so definierten mittleren Bereich 50 des Rohrmantels 12 besitzt derselbe eine unterschiedlich dicke Wandstärke. In den Endbereichen dieses mittleren Bereiches 50, die in den Punkten K enden, hat die Wandstärke des Rohrmantels 12 das Maß d2. Im übrigen Bereich besitzt die Wandstärke das Maß d1. Das Maß d2 ist kleiner als das Maß d1.

Außerhalb des durch den Winkel w definierten mittleren Bereiches 50 schließt sich jeweils ein äußerer Bereich 52 an. In diesem Bereich 52 weist die Innenseite des Rohrmantels 12 zwischen dem Punkt K und einem Punkt R, der im Bereich der Randverstärkung 18 liegt, ebenfalls die Krümmung k auf. Der Mittelpunkt für diesen Kreisbogen ist nicht der Mittelpunkt M. Durch die Ausbildung eines Knickpunktes in dem Punkt K liegt der Mittelpunkt für den in der Zeichnung linken äußeren Bereich 52 links unterhalb des Mittelpunktes M und für den in der Zeichnung rechten äußeren Bereich 52 rechts unterhalb des Mittelpunktes M.

Im Bereich der Vertiefungen 16 besitzt die Innenseite des Rohrmantels 12 ebenfalls eine gleichmäßige Krümmung. Der dieser Krümmung entsprechende Radius ist um das Maß t, das der Tiefe der Vertiefung 16 entspricht, größer als der Radius r. Der zugehörige Mittelpunkt für den Bogen, der zwischen den Punkten R, der Stelle, wo die Vertiefung 16 beginnt und dem inneren Eckpunkt 54, der an den Spalt 14 angrenzt, ist der gleiche, wie für den Bogen im Bereich zwischen dem Knickpunkt K und dem Rücksprung R.

Auf der Außenseite des Rohrmantels 12, im Bereich zwischen dem Knickpunkt K und dem inneren Eckpunkt 54, besitzt der Rohrmantel 12 eine Verstärkungsrippe 56. In Längsrichtung L (Fig. 1) sind mehrere dieser Rippen im Abstand zueinander auf der Außenseite des Rohrmantels 12 vorhanden. Im Bereich des Spaltes 14 enden die Rippen jeweils in der Randverstärkung 18. Diese Randverstärkung 18 besitzt eine zum Spalt hin gerichtete Spaltseite 42 und eine dieser gegenüberliegende Rückseite 58. Die Spaltseite 42 jeder Randverstärkung 18 ist so ausgerichtet, daß im verspannten Zustand des Rohrmantels 12, bei dem die äußeren Eckpunkte 44 der Randverstärkung 18 aneinanderliegen, die beiden Spaltseiten 42 einen zum Mittelpunkt M hin gerichteten V-förmigen Spalt 59 freilassen. Die beiden Rückseiten 58 sind in dieser Stellung parallel zueinander und parallel zu der Symmetrieachse 40 ausgerichtet. Dadurch liegen in dieser Stellung die Anlageflächen der bei der Verschraubung des Rohrmantels 12 verwendeten Schrauben 34 und Muttern 36 (Fig. 1) vollflächig an der Rückseite 58 der beiden Randverstärkungen 18 an. Weiterhin ist in dieser Stellung die Bohrungsachse 60 der für die Verschraubung vorgesehenen Bohrungslöcher 37 normal zu der Symmetrieachse 40 und damit normal zu der Rückseite 58 ausgerichtet. Im entspannten Zustand des Rohrmantels 12 besitzt diese Achse 60 auf der Symmetrieachse 40 einen Knickpunkt.

Beim Verspannen der beiden Randverstärkungen 18 mit Hilfe der in Fig. 1 skizzierten Schraubverbindung verschwenken sich die beiden gegenüberliegenden Rippen 56 (Fig. 2) mit dem zugehörigen Rohrmantelbereich um den jeweiligen Knickpunkt K. Infolge der im Bereich des Knickpunktes K geringsten Biegesteifigkeit des Rohrmantels beim Verspannen desselben verformt sich der Rohrmantel 12 praktisch nur im Bereich des Knickpunktes K. In diesem Bereich wird der Rohrmantel 12 dabei auf seiner Innenseite etwas gestaucht und auf seiner Außenseite etwas gezogen. Im Knickpunkt K wird somit gleichsam ein Gelenk in dem Rohrmantel 12 erzeugt. Nach dem Verschwenken, d. h. in der gestrichelt dargestellten Lage der Randverstärkungen 18, besitzt die Innenseite des Rohrmantels 12 bis auf den vertieften Bereich zwischen den Rücksprüngen R die Krümmung k. Mit dieser Krümmung k legt sich der Rohrmantel 12 um die Außenseite des in Fig. 1 dargestellten Gummischlauches 20 und damit um die Rohre 22, 24 herum an.

Im Bereich der Vertiefungen 16 wird eine Schürze 19 in den Rohrmantel 12 hineingelegt. Die Schürze 19 besitzt die Dicke t und ist so gewölbt, daß sie mit ihrer Außenseite vollflächig auf der Innenseite des Rohrmantels 12 im Bereich dieser Vertiefung im zusammengeschobenen Zustand der Randverstärkungen 18 aufliegt. Die Innenseite der Schürze 19 besitzt damit ebenso wie der übrige Bereich des Rohrmantels 12 die Krümmung k.

Durch die Schürze 19 wird verhindert, daß beim Verspannen des Rohrmantels 12 Teile des Gummischlauches in dem Spalt 14 eingezwängt werden.

Im verspannten Zustand besitzt der Rohrmantel 12 im Bereich der Randverstärkung 18 den nach innen sich öffnenden V-förmigen Spalt 59. Beim weiteren Anziehen der Schrauben, d. h. beim zusätzlichen Aneinanderziehen der beiden Randverstärkungen 18, würde sich der Spalt 59 verkleinern. Dies würde bewirken, daß im äußeren Bereich der Rippen 56 zusätzliche Druckspannungen und auf der gegenüberliegenden Innenseite des Rohrmantels 12 Zugspannungen auftreten würden. Diese Wirkung ist erwünscht, da dadurch sichergestellt werden kann, daß in den Außenbereichen der Rippen 56 keine zusätzlichen Zugspannungen, die zum Aufreißen der Rippe 56 führen könnten, auftreten können. Aufgrund der sich nicht verändernden Krümmung k auf der Innenseite des Rohrmantels 12 wird der Rohrmantel 12 bei seinem Einbau immer so stark verspannt angezogen werden, daß die äußeren Eckpunkte 44 der Randverstärkungen 18 aneinanderstoßen. Dies entspricht der Soll-Stellung der Randverstärkungen 18. Im praktischen Betrieb wird es nun im Regelfall so sein, daß die Schrauben noch geringfügig weiter angedreht werden, um dem Benutzer die Gewähr zu geben, daß die Eckpunkte 44 auch wirklich dicht aneinanderliegen. Bei diesem geringfügigen Weiterdrehen wird nun der oben geschilderte Effekt für die Rippen eintreten. Insbesondere dadurch wird es möglich, die Rippen und damit auch den gesamten Rohrmantel 12 als Gußteil herzustellen; die gegen Zug sehr empfindlichen Außenseiten der Rippen werden nämlich durch Zugspannungen nicht überbeansprucht. Infolge der gegenüber den Rippen großen Oberfläche der Rohrmantel-Innenseite wirken sich die zusätzlich entstehenden Zugspannungen auf dieser Seite des Rohrmantels nicht schädlich aus.

Um zu verhindern, daß die Schürze 19 im in den Rohrmantel 12 eingelegten Zustand in Längsrichtung L aus demselben herausrutscht, besitzt die Schürze 19 an ihrer in Längsrichtung L oberen und unteren Seite einen nach außen umgewölbten Rand 62, mit dem sie auf jeweils einer der beiden Stirnseiten des Rohrmantels 12 aufliegt.

Der Gummischlauch 20 dient zum dichtenden Abschluß der Stirnseiten 26, 28 der Rohre 22, 24, die innerhalb des Rohrmantels 12 stumpf aufeinandersitzen. Der Gummischlauch 20 ist so dimensioniert, daß er im zusammengebauten Zustand der Rohrkupplung 10 die zwischen den Stirnseiten 26, 28 vorhandene Fuge nach außen hin dicht verschließt.

Im eingebauten Zustand der Rohrkupplung 10 liegen auf der Innenseite der gestoßenen Rohre 22, 24 die Endbereiche 32 des Metallbandes 30 an. Der Bereich des Metallbandes 30, der auf der Außenseite des Gummischlauches 20 liegt, berührt wiederum die Innenseite des Rohrmantels 12. Dadurch wird erreicht, daß sich der Rohrmantel 12 gegenüber den Rohren 22, 24 nicht statisch aufladen kann. Dadurch, daß die Endbereiche 32 des Metallbandes 30 auf der Innenseite des Gummischlauches 20 nicht aneinanderstoßen, sondern relativ weit voneinander auf der Innenseite des Gummischlauches 20 enden, wird die Dichtwirkung des Gummmischlauches 20 nicht beeinträchtigt: Im Bereich der Stoßfuge der beiden Rohre 22, 24 werden dieselben unmittelbar nur vom Gummischlauch 20 berührt.

**Ansprüche**

1. Rohrkupplung zum Verbinden zweier Rohre, mit in Längsrichtung aufgetrenntem Rohrmantel, dessen beide Längsränder gegenseitig verschraubbar ausgebildet sind,
**dadurch gekennzeichnet, daß**
-die Innenseite des Rohrmantels (12) im Querschnitt aus drei aneinanderstoßende Kreisbögen gleicher Krümmung (k) zusammengesetzt ist, von denen der mittlere Kreisbogen den beiden Längsrändern (18) gegenüberliegend angeordnet ist,
-der Bogenwinkel (w) des mittleren Kreisbogens größer als Null Grad und kleiner als 180 Grad ist,
-die beiden äußeren Kreisbögen an den jeweiligen Endbereichen (K) des mittleren Kreisbogens - schwenkbar derart befestigt sind, daß sie in eine Lage bringbar sind, in der sie zusammen mit dem mittleren Kreisbogen auf dem Umfang eines einzigen Kreises liegen, und
-der Rohrmantel (12) im Bereich der drei Kreisbögen jeweils biegesteif ausgebildet ist.

2. Rohrkupplung nach Anspruch 1,
**dadurch gekennzeichnet, daß**
der Teil des Rohrmantels (12), dessen Innenseite durch den äußeren Kreisbogen definiert ist, mittels einer gelenkigen Ausbildung an dem Teil des Rohrmantels angeschlossen ist, dessen Innenseite durch den mittleren Kreisbogen definiert ist.

3. Rohrkupplung nach Anspruch 1,
**dadurch gekennzeichnet, daß**
-die drei Teile des Rohrmantels einstückig miteinander verbunden sind,
-die Wandstärke des Rohrmantels im Stoßbereich von jeweils zwei aneinanderstoßenden Kreisbögen einen geringsten Wert (d2) besitzt,
so daß die Schwenkbewegung durch elastische und/oder plastische Verformung des Rohrmantels - (12) im Stoßbereich (K) erfolgt.

4. Rohrkupplung nach Anspruch 3,
**dadurch gekennzeichnet, daß**
der Rohrmantel (12) eine konstante Wandstärke besitzt, und auf seiner Außenseite mehrere, voneinander beabstandete Verstärkungsrippen (56) senkrecht zur Längsrichtung (L) der Rohrkupplung - (12) derart angebracht sind, daß der Rohrmantel - (12) in den beiden Stoßbereichen (K) die geringste Biegesteifigkeit besitzt.

5. Rohrkupplung nach Anspruch 1,
**dadurch gekennzeichnet, daß**
auf der Rückseite (58) eines Längsrandes (18) seitlich neben dem für die gegenseitige Verschraubung der beiden Längsränder (18) vorgesehenen Bohrungsloch (37) jeweils ein Anschlag (38) vorhanden ist, gegen den der Kopf einer für die Verschraubung vorgesehenen Schraube (34) so dicht anlegbar ist, daß beim Aufschrauben einer Mutter (36) auf diese Schraube (34) sich letztere nicht um ihre Längsachse (39) drehen kann.

6. Rohrkupplung nach Anspruch 1,
**dadurch gekennzeichnet, daß**
-im Bereich der beiden Längsränder die jeweilige Innenseite des Rohrmantels eine gleichmäßige Vertiefung (16) aufweist,
-eine Schürze (19), deren Dicke dem Maß der Vertiefung entspricht, derart in die Vertiefung einlegbar ist, daß sie den Spalt (14) zwischen den Längsrändern (18) überdeckt.

7. Rohrkupplung nach Anspruch 6,
**dadurch gekennzeichnet, daß**
zumindest ein Rand der Schürze (19) in Längsrichtung (L) nach außen umgebogen ist, so daß die Schürze mit diesem Rand auf einer Stirnseite des Rohrmantels anlagerbar ist.

8. Rohrkupplung nach Anspruch 6,
**dadurch gekennzeichnet, daß**
ein elastisch verformbarer Schlauch (20) -mit oder ohne Auftrennung in Längsrichtung (L) -in den Rohrmantel (12) einlegbar ist, wobei die Krümmung der Innenseite des Rohrmantels derjenigen der Außenseite des Schlauches entspricht.

9. Rohrkupplung nach Anspruch 8,
**dadurch gekennzeichnet, daß**
ein metallisches, flaches Band (30) zwischen den Schlauch (20) und den Rohrmantel (12) einsteckbar ist, wobei beide Enden (32) des Bandes (30) in den Innenraum des Schlauches (20) hineinragen.

10. Rohrkupplung nach Anspruch 1,
**dadurch gekennzeichnet, daß**
sie ein Gußteil ist.

11. Rohrkupplung nach Anspruch 10,
**dadurch gekennzeichnet, daß**
das Gußteil aus einer Zinklegierung oder einer Aluminium-Zinn-Feingußlegierung besteht.

FIG.1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | US-A-4 473 246  (McDOWELL) <br><br> * Figuren * | 1,5,9, 10 | F 16 L  21/00 |
| A,D | US-A-3 700 008  (HACKMAN) <br> * Figur 1 * | 1,6,8 | |
| A,D | EP-A-0 057 373  (GEHRING) <br> * Figur 5 * | 1,3 | |
| A,D | GB-A-2 132 677  (PONT-A-MOUSSON SA) <br> * Figuren * | 1 | |

RECHERCHIERTE SACHGEBIETE (Int. Cl.4)

F 16 L

Der vorliegende Recherchenbericht wurde für alle Patentansprüche erstellt.

| Recherchenort | Abschlußdatum der Recherche | Prüfer |
|---|---|---|
| DEN HAAG | 03-05-1987 | HUBEAU M.G. |